# EUROPEAN PATENT APPLICATION

(11) **EP 4 835 279 A1**
(43) Date of publication of application: **04.11.2026**
(21) Application number: 26176095.3
(22) Date of filing: 01.05.2026
(51) Int. Cl.: F02C 7/16, F01D 21/00, F02C 7/22, F02C 9/36, F23D 14/78

(54) **AIRCRAFT POWERPLANT WITH INJECTOR COOLING SYSTEM**

(30) Priority: 02.05.2025 US 202519197689
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

A method is provided for operating an aircraft powerplant. During this method, a turbine engine of the aircraft powerplant is operated. The operating of the turbine engine includes delivering fuel to a fuel injector of the turbine engine, injecting the fuel into a combustor of the turbine engine using the fuel injector, and combusting the fuel within the combustor. Operation of the turbine engine is shut down. Fluid is circulated through the fuel injector to cool the fuel injector when the turbine engine is non-operational subsequent to the shutting down of the operation of the turbine engine.

## Description

### BACKGROUND OF THE DISCLOSURE

### 1. Technical Field

This disclosure relates generally to an aircraft and, more particularly, to a cooling system for a powerplant of the aircraft.

### 2. Background Information

An aircraft powerplant with a turbofan engine may include various cooling systems for its internal components. Various types and configurations of cooling systems are known in the art. While these known cooling systems have various benefits, there is still room in the art for improvement.

### SUMMARY OF THE DISCLOSURE

According to an aspect of the present disclosure, a method is provided for operating an aircraft powerplant. During this method, a turbine engine of the aircraft powerplant is operated. The operating of the turbine engine includes delivering fuel to a fuel injector of the turbine engine, injecting the fuel into a combustor of the turbine engine using the fuel injector, and combusting the fuel within the combustor. Operation of the turbine engine is shut down. Fluid is circulated through the fuel injector to cool the fuel injector when the turbine engine is non-operational subsequent to the shutting down of the operation of the turbine engine.

According to another aspect of the present disclosure, an aircraft powerplant is provided that includes a turbine engine and a cooling system. The turbine engine includes a compressor section, a combustor section, a turbine section and a flowpath. The flowpath extends through the compressor section, the combustor section and the turbine section. The combustor section includes a combustor and a fuel injector. The combustor includes a combustion chamber along the flowpath. The fuel injector is configured to inject fuel into the combustion chamber for combustion during operation of the turbine engine. The cooling system is configured to flow fluid in the fuel injector when the turbine engine is non-operational subsequent to shutdown of the turbine engine. The cooling system includes an electric pump which is operable independent of operation of the turbine engine.

According to still another aspect of the present disclosure, another aircraft powerplant is provided that includes a turbine engine and a cooling system. The turbine engine includes a compressor section, a combustor section, a turbine section and a flowpath. The flowpath extends through the compressor section, the combustor section and the turbine section. The combustor section includes a combustor and a fuel injector. The combustor includes a combustion chamber along the flowpath. The fuel injector is configured to inject fuel into the combustion chamber for combustion during operation of the turbine engine. The cooling system is configured to flow fluid in the fuel injector when the turbine engine is non-operational subsequent to shutdown of the turbine engine. The cooling system is discrete from a fuel system for the turbine engine.

The fuel injector may include: a fuel passage and a fluid passage. The fuel passage may be configured to flow the fuel for injecting into the combustion chamber. The fluid passage may be configured to flow the fluid for circulating through the fuel injector. The fluid passage may be disposed between the fuel passage and an exterior of the fuel injector.

The fuel injector may include a fuel passage and a fluid passage. The fuel passage may be configured to flow the fuel for injecting into the combustion chamber. The fluid passage may be configured to flow the fluid for circulating through the fuel injector. The fluid passage may extend longitudinally along and circumscribe the fuel passage.

The fuel injector may also include an air plenum between the fuel passage and the fluid passage.

The fuel injector may also include a second fluid passage configured to further flow the fluid for circulating through the fuel injector. The second fluid passage may extend longitudinally along and circumscribe the fluid passage.

The cooling system may also be configured to evacuate the fluid from the fuel injector prior to subsequent operation of the turbine engine.

The cooling system may include a heat exchanger configured to cool the fluid.

Combustion within the combustor may be terminated during the shutting down of the operation of the turbine engine.

The turbine engine may include a compressor section, a combustor section, a turbine section and a rotating structure. The combustor section may include the combustor and the fuel injector. The rotating structure may include a compressor rotor in the compressor section and a turbine rotor in the turbine section. The rotating structure may rotate about an axis at or above a threshold speed during the operating of the turbine engine. The rotating structure may be at least one of stationary or rotating about the axis below the threshold speed when the turbine engine is non-operational.

The fluid may be circulated through the fuel injector for a predetermined period of time subsequent to the shutting down of the operation of the turbine engine.

The fluid may be circulated through a fluid passage in the fuel injector during the circulating of the fluid. The fluid may not be circulated through the fluid passage in the fuel injector during the operating of the turbine engine.

The fluid may be circulated through a fluid passage in the fuel injector during the circulating of the fluid. The fluid may not be circulated through the fluid passage in the fuel injector during the shutting down of the operation of the turbine engine.

The method may also include circulating the fluid through the fuel injector during the shutting down of the operation of the turbine engine.

The method may also include circulating of the fluid through the fuel injector during the operating of the turbine engine.

The fluid may be evacuated from the fuel injector prior to a subsequent operation of the turbine engine.

The fluid may be circulated using an electric pump.

The fuel may flow through a fuel passage in the fuel injector during the operating of the turbine engine. The fluid may flow through a fluid passage in the fuel injector during the circulating of the fluid. The fluid passage may be disposed between the fuel passage and an exterior of the fuel injector within the fuel injector.

The fuel may flow through a fuel passage in the fuel injector during the operating of the turbine engine. The fluid may flow through a fluid passage in the fuel injector during the circulating of the fluid. The fluid passage may extend longitudinally along and circumscribe the fuel passage within the fuel injector.

An air plenum may be disposed between the fuel passage and the fluid passage within the fuel injector.

The fluid passage may be a first fluid passage. The fluid may also flow through a second fluid passage in the fuel injector during the circulating of the fluid. The second fluid passage may extend longitudinally along and circumscribe the fluid passage within the fuel injector.

The fluid may be or otherwise include lubricant.

The fluid may be or otherwise include the fuel.

The fluid may be or otherwise include coolant.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2 is a schematic illustration of a portion of the aircraft propulsion system at a combustor section between a compressor section and a turbine section.
FIG. 3 is a partial sectional illustration of a member of a combustor.
FIG. 4 is a partial schematic illustration of a portion of the aircraft propulsion system with a fuel delivery system and an injector cooling system.
FIG. 5 is a flow diagram of a method for operating an aircraft powerplant.
FIGS. 6A-C are schematic cross-sectional illustrations of a fuel injector with various cooling circuit arrangements for the injector cooling system.
FIG. 7 is a schematic cross-sectional illustration of alternative fuel passage arrangement for the fuel injector.

### DETAILED DESCRIPTION

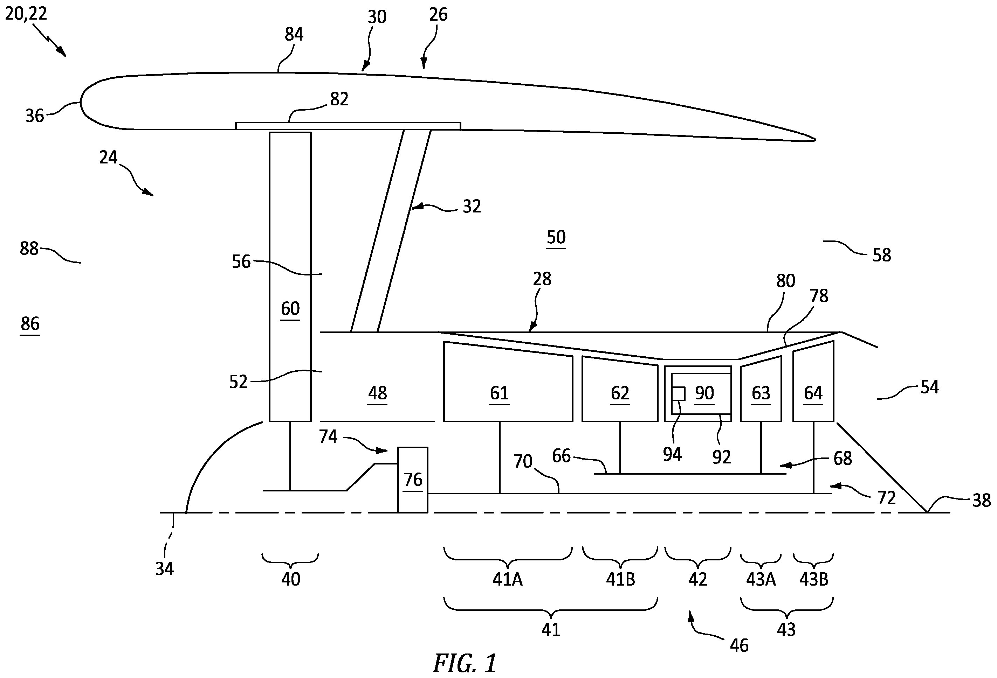

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present disclosure, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open propulsor rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

The aircraft propulsion system 22 includes a gas turbine engine 24 (e.g., a turbofan engine) housed within a stationary propulsion system housing 26. This propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 extends axially along an axis 34 of the aircraft propulsion system 22 between an axial upstream, forward end 36 of the aircraft propulsion system 22 and an axial downstream, aft end 38 of the aircraft propulsion system 22. Briefly, the propulsion system axis 34 may be a centerline axis of the aircraft propulsion system 22, the turbine engine 24 and/or one or more of its members. The propulsion system axis 34 may also or alternatively be a rotational axis for one or more members of the turbine engine 24.

The aircraft propulsion system 22 and its turbine engine 24 of FIG. 1 include a propulsor section 40 (e.g., a fan section), a compressor section 41, a combustor section 42 and a turbine section 43. The compressor section 41 of FIG. 1 includes a low pressure compressor (LPC) section 41A and a high pressure compressor (HPC) section 41B. The turbine section 43 of FIG. 1 includes a high pressure turbine (HPT) section 43A and a low pressure turbine (LPT) section 43B. At least (or only) the LPC section 41A, the HPC section 41B, the combustor section 42, the HPT section 43A and the LPT section 43B collectively form a core 46 (e.g., a gas generator) of the turbine engine 24. The aircraft propulsion system 22 and its turbine engine 24 of FIG. 1 also include a core flowpath 48 (e.g., an annular core flowpath) and a bypass flowpath 50 (e.g., an annular bypass flowpath). The core flowpath 48 extends sequentially through the LPC section 41A, the HPC section 41B, the combustor section 42, the HPT section 43A and the LPT section 43B from an airflow inlet 52 into the core flowpath 48 to a combustion products exhaust 54 out from the core flowpath 48. The bypass flowpath 50 extends through a bypass duct from an airflow inlet 56 into the bypass flowpath 50 to an airflow exhaust 58 from the bypass flowpath 50, where the bypass duct may be formed by the inner housing structure 28 and the outer housing structure 30. The bypass flowpath 50 and its bypass duct are configured to bypass (e.g., are disposed radially outboard of and extend along) the engine core 46 and the inner housing structure 28.

The propulsor section 40, the LPC section 41A, the HPC section 41B, the combustor section 42, the HPT section 43A and the LPT section 43B may be arranged sequentially along the propulsion system axis 34 within the propulsion system housing 26. The propulsor section 40 includes a bladed propulsor rotor 60; e.g., a fan rotor. The LPC section 41A includes a bladed low pressure compressor (LPC) rotor 61. The HPC section 41B includes a bladed high pressure compressor (HPC) rotor 62. The HPT section 43A includes a bladed high pressure turbine (HPT) rotor 63. The LPT section 43B includes a bladed low pressure turbine (LPT) rotor 64. Each of these engine rotors 60-64 includes a rotor base (e.g., a disk or a hub) and a plurality of rotor blades (e.g., airfoils, vanes, etc.). The rotor blades may be arranged into one or more stages axially along the respective engine rotor 62-64. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 62 is coupled to and rotatable with the HPT rotor 63. The HPC rotor 62 of FIG. 1, for example, is connected to the HPT rotor 63 through a high speed shaft 66. At least (or only) the HPC rotor 62, the HPT rotor 63 and the high speed shaft 66 collectively form a high speed rotating structure 68; e.g., a high speed spool of the turbine engine 24 and its engine core 46. This high speed rotating structure 68 of FIG. 1 and its members 62, 63 and 66 are rotatable about the propulsion system axis 34. However, it is contemplated the high speed rotating structure 68 may alternatively be rotatable about another axis radially and/or angularly offset from the rotational axis of the propulsor rotor 60 and/or the centerline axis of the turbine engine 24.

The LPC rotor 61 is coupled to and rotatable with the LPT rotor 64. The LPC rotor 61 of FIG. 1, for example, is connected to the LPT rotor 64 through a low speed shaft 70. At least (or only) the LPC rotor 61, the LPT rotor 64 and the low speed shaft 70 collectively form a low speed rotating structure 72; e.g., a low speed spool of the turbine engine 24 and its engine core 46. This low speed rotating structure 72 of FIG. 1 and its members 61, 64 and 70 are rotatable about the propulsion system axis 34. However, it is contemplated the low speed rotating structure 72 may alternatively be rotatable about another axis radially and/or angularly offset from the rotational axis of the propulsor rotor 60 and/or the centerline axis of the turbine engine 24.

The low speed rotating structure 72 is coupled to the propulsor rotor 60 through a rotating structure-to-propulsor (RSP) drivetrain 74. The RSP drivetrain 74 may be configured as a geared drivetrain, where a geartrain 76 (e.g., a transmission, a speed change device, an epicyclic geartrain, etc.) is disposed between and operatively couples the propulsor rotor 60 to the low speed rotating structure 72 and its LPT rotor 64. With this arrangement, the propulsor rotor 60 may rotate at a different (e.g., slower) rotational speed than the low speed rotating structure 72 and its LPT rotor 64. Here, the propulsor rotor 60 and the low speed rotating structure 72 may rotate in a common (the same) direction about the propulsion system axis 34 or in opposite directions about the propulsion system axis 34 depending, for example, upon the specific configuration of the geartrain 76. Alternatively, the RSP drivetrain 74 may be configured as a direct-drive drivetrain, where the geartrain 76 is omitted. With such an arrangement, the propulsor rotor 60 rotates at a common (the same) rotational speed as the low speed rotating structure 72 and its LPT rotor 64.

The inner housing structure 28 of FIG. 1 includes an inner case 78 (e.g., a core case) for the turbine engine 24 and an inner nacelle structure 80 (sometimes referred to as an inner fixed structure (IFS)). The inner case 78 is disposed radially outboard of, extends axially along and may circumscribe one or more or all of the engine sections 41A-43B and the engine rotors 61-64. The inner case 78 may thereby house and provide a support structure for the respective engine sections 41A-43B and the engine rotors 61-64. The inner nacelle structure 80 is configured to provide an aerodynamic cover over the engine core 46 and its inner case 78. The inner housing structure 28 and its inner nacelle structure 80 may also form a radial inner peripheral boundary of the bypass flowpath 50.

The outer housing structure 30 of FIG. 1 includes an outer case 82 (e.g., a fan case) for the turbine engine 24 and an outer nacelle structure 84. The outer case 82 is disposed radially outboard of, extends axially along and may circumscribe the propulsor section 40 and its propulsor rotor 60. The outer case 82 may thereby house and may be configured as a containment structure for the propulsor section 40 and its propulsor rotor 60. The outer nacelle structure 84 is configured to provide an aerodynamic cover over the outer case 82. The outer housing structure 30 and its outer nacelle structure 84 may also form a radial outer peripheral boundary of the bypass flowpath 50.

During operation of the aircraft propulsion system 22 of FIG. 1, ambient air from an environment 86 external to the aircraft and its aircraft propulsion system 22 enters the aircraft propulsion system 22 and its turbine engine 24 through an airflow inlet 88. This air is propelled by the rotating propulsor rotor 60 in a downstream, aft direction towards the propulsion system aft end 38.

An outer stream of the air propelled by the rotating propulsor rotor 60 is directed into the bypass flowpath 50 through its bypass inlet 56, which air entering the bypass flowpath 50 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 58 to provide forward thrust. This propulsion of the bypass air may account for a majority of the forward thrust generated by the aircraft propulsion system 22 and its turbine engine 24 of FIG. 1.

An inner stream of the air propelled by the rotating propulsor rotor 60 is directed into the core flowpath 48 through its core inlet 52, which air entering the core flowpath 48 may be referred to as "core air". This core air is compressed by the LPC rotor 61 and the HPC rotor 62 and is directed into a combustion chamber 90 (e.g., annular combustion chamber) of a combustor 92 (e.g., annular combustor) in the combustor section 42. Fuel is injected into the combustion chamber 90 by one or more fuel injectors 94 and mixed with the compressed core air to provide a fuel-air mixture. This fuel-air mixture is ignited and combustion products thereof flow through and sequentially drive rotation of the HPT rotor 63 and the LPT rotor 64. The rotation of the HPT rotor 63 and the LPT rotor 64 respectively drive rotation of the HPC rotor 62 and the LPC rotor 61 and, thus, compression of the air received from the core inlet 52. The rotation of the LPT rotor 64 also drives rotation of the propulsor rotor 60 through the RSP drivetrain 74.

While the turbine engine 24 is described above with a particular two rotating structure arrangement (e.g., a two-spool architecture), the present disclosure is not limited thereto. For example, the LPC rotor 61 may be omitted to configure the LPT rotor 64 as a power turbine (PT) rotor for the propulsor rotor 60. The turbine engine 24 may also or alternatively include another rotating structure with a bladed compressor rotor in the compressor section 41 and a bladed turbine rotor in the turbine section 43; e.g., an intermediate speed spool for the engine core 46.

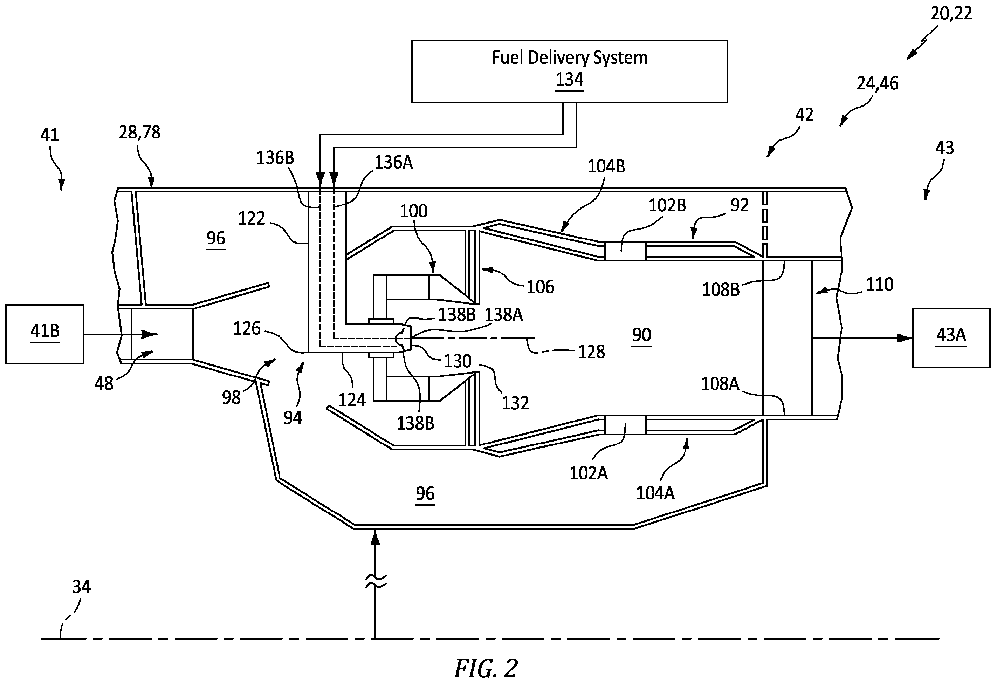

FIG. 2 illustrates a portion of the combustor section 42 along the core flowpath 48 between the HPC section 41B and the HPT section 43A (schematically shown). This combustor section 42 includes the combustor 92, a diffuser plenum 96 and the one or more injector assemblies 98 (one visible in FIG. 2). Briefly, the combustor 92 is disposed within (e.g., surrounded by) the diffuser plenum 96. This diffuser plenum 96 receives the compressed core air from the HPC section 41B for subsequent provision into the combustion chamber 90. The injector assemblies 98 are arranged and may be equispaced circumferentially about the propulsion system axis 34 in an array; e.g., an annular injector array. Each of these injector assemblies 98 may include a respective one of the fuel injectors 94 mated with an air swirler structure 100. The fuel injector 94 of FIG. 2 injects the fuel into the combustion chamber 90. The air swirler structure 100 of FIG. 2 directs some of the core air from the diffuser plenum 96 into the combustion chamber 90 in a manner that facilitates mixing the core air with the injected fuel. One or more igniters (not shown) ignite the fuel-air mixture within the combustion chamber 90. One or more quench apertures 102A, 102B (generally referred to as "102") (e.g., dilution holes) in each wall 104A, 104B (generally referred to as "104") of the combustor 92 may direct additional core air from the diffuser plenum 96 into the combustion chamber 90 to facilitate substantially complete burnout of (e.g., make stoichiometrically lean) the combustion products; e.g., the ignited fuel-air mixture.

The combustor 92 may be configured as an annular combustor; e.g., an annular floating wall combustor. The combustor 92 of FIG. 2, for example, includes an annular combustor bulkhead 106, the tubular inner combustor wall 104A and the tubular outer combustor wall 104B. The bulkhead 106 of FIG. 2 extends radially between and to the inner combustor wall 104A and the outer combustor wall 104B. The bulkhead 106 may be connected (e.g., mechanically fastened or otherwise attached) to the inner combustor wall 104A and/or the outer combustor wall 104B. Each combustor wall 104 projects axially along the propulsion system axis 34 out from the bulkhead 106 towards the HPT section 43A. The inner combustor wall 104A of FIG. 2, for example, projects axially to and may be connected to an (e.g., tubular) inner platform 108A of a downstream stator vane array 110 in the HPT section 43A. The outer combustor wall 104B of FIG. 2 projects axially to and may be connected to an (e.g., tubular) outer platform 108B of the downstream stator vane array 110. With the arrangement of FIG. 2, the combustion chamber 90 is formed by and extends radially within the combustor 92 between and to the inner combustor wall 104A and the outer combustor wall 104B. The combustion chamber 90 is formed by and extends axially (in an upstream direction along the core flowpath 48) into the combustor 92 from the stator vane array 110 to the bulkhead 106. The combustion chamber 90 also extends within the combustor 92 circumferentially about (e.g., completely around) the propulsion system axis 34, for example configuring the combustion chamber 90 of FIG. 2 as a full-hoop annulus.

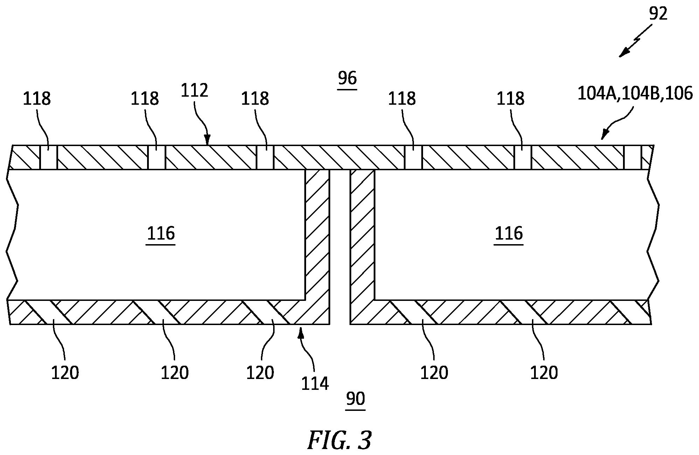

Referring to FIG. 3, any one or more or all of the combustor members 104A, 104B and/or 106 may each be configured as a multi-walled structure; e.g., a hollow, dual-walled structure. Each combustor members 104A, 104B, 106 of FIG. 3, for example, includes a shell 112, a heat shield 114 (e.g., a liner) and one or more combustor wall cooling cavities 116 (e.g., impingement cavities) which are formed by and are disposed (e.g., radially and/or axially) between the shell 112 and the heat shield 114. Each cooling cavity 116 of FIG. 3 is fluidly coupled with the diffuser plenum 96 through one or more cooling apertures 118 in the shell 112; e.g., impingement apertures. Each cooling cavity 116 of FIG. 3 is fluidly coupled with the combustion chamber 90 through one or more cooling apertures 120 in the heat shield 114; e.g., effusion apertures. Of course, various other multi-walled combustor structures are known in the art, and the present disclosure is not limited to any particular ones thereof. Furthermore, it is contemplated any one or more or all of the combustor members 104A, 104B and/or 106 of FIG. 2 may each alternatively be configured as a single-walled structure. The shell 112 of FIG. 3, for example, may be omitted and the heat shield 114 may form a single walled liner / wall.

Referring to FIG. 2, each fuel injector 94 includes a fuel injector stem 122 and a fuel injector nozzle 124. The injector stem 122 of FIG. 2 is mounted to the inner case 78 and is configured to support the injector nozzle 124. This injector stem 122 projects radially inward towards the propulsion system axis 34 into the diffuser plenum 96 from the inner case 78 to a radial inner end of the respective fuel injector 94. The injector nozzle 124 of FIG. 2 is connected to the injector stem 122 at (e.g., on, adjacent or proximate) the injector inner end. The injector nozzle 124, for example, may meet the injector stem 122 at an intersection 126 (e.g., an elbow) between the injector stem 122 and the injector nozzle 124. This injector nozzle 124 projects axially along a centerline axis 128 of the injector nozzle 124 (e.g., generally axially along the propulsion system axis 34) out from the injector stem 122 and partially into a bore of the air swirler structure 100. A tip 130 of the injector nozzle 124 of FIG. 2 is thereby disposed within the air swirler structure 100 and its swirler bore. Here, the nozzle tip 130 may be recessed from an outlet 132 of the air swirler structure 100 into the combustion chamber 90 by an axial distance along the nozzle axis 128. The present disclosure, however, is not limited to such an exemplary spatial relationship between the injector nozzle 124 and the air swirler structure 100. Moreover, it is contemplated the air swirler structure 100 may be omitted where, for example, the injector nozzle 124 is configured as an air blast injector nozzle.

Each fuel injector 94 is fluidly coupled to a fuel delivery system 134 for the turbine engine 24 and its combustor section 42. This fuel delivery system 134 is configured to selectively provide one or more pressurized flows of the fuel to each fuel injector 94 for injection into the combustion chamber 90 and subsequent combustion as described above. The fuel injector 94 of FIG. 2, for example, is configured with a first fuel passage 136A (e.g., a primary fuel passage) and a second fuel passage 136B (e.g., a secondary fuel passage). The first fuel passage 136A of FIG. 2 extends longitudinally through the injector stem 122 and longitudinally within the injector nozzle 124 to at least one first nozzle orifice 138A at (or near) the nozzle tip 130. The second fuel passage 136B of FIG. 2 extends longitudinally through the injector stem 122 and longitudinally within the injector nozzle 124 to one or more second nozzle orifices 138B at (or near) the nozzle tip 130. With this arrangement, the first fuel passage 136A may receive a first flow of the fuel from the fuel delivery system 134 and inject that fuel into the combustion chamber 90 through its first nozzle orifice 138A. Similarly, the second fuel passage 136B may receive a second flow of the fuel from the fuel delivery system 134 and inject that fuel into the combustion chamber 90 through its second nozzle orifices 138B. For ease of description, the fuel provided to the first fuel passage 136A and the second fuel passage 136B by the fuel delivery system 134 is described herein as a common (the same) fuel. It is contemplated, however, the fuel delivery system 134 may alternatively provide different types of fuel to the first and the second fuel passage 136B of each fuel injector 94.

During operation of the turbine engine 24, each fuel injector 94 is subject to relatively high operational temperatures. These high operational temperatures may be at or above a coking temperature of the fuel that is directed through the respective fuel injector 94 into the combustor 92. However, since the pressurized fuel received from the fuel delivery system 134 flows relatively quickly through each fuel injector 94 before being injected into the combustion chamber 90 during normal turbine engine operation, a temperature of the fuel in the respective fuel injector 94 may not rise to or above the coking temperature before being injected for combustion. However, during shutdown of the turbine engine 24, the flow of fuel from the fuel delivery system 134 into each fuel injector 94 is terminated (e.g., cutoff) to facilitate a flameout in the combustion chamber 90 and termination of the production of the combustion products used to drive rotation of the turbine rotors 63 and 64 (see FIG. 1). Following this shutdown of the turbine engine 24, a quantity of the fuel (e.g., residual fuel) may remain within each fuel injector 94. Moreover, as the rotation of the engine rotating structures 68 and 72 (see FIG. 1) begin to slow and eventually stop (given the previous termination in the production of the combustion products), gases within the turbine engine 24 and its engine core 46 may become stagnant. Residual heat energy radiated from various engine components (e.g., thermal masses) such as the combustor 92 and its members 104A, 104B and 106 may thereby heat up other nearby engine components such as the fuel injectors 94. This phenomena may be referred to as "thermal soak-back". Without mitigation and with thermal soak-back under such post-engine shutdown conditions, the residual fuel remaining within each fuel injector 94 may be heated to a temperature at or above its coking temperature. This heated fuel may thereby begin to coke within the first and/or the second fuel passages 136A and 136B (generally referred to as "136") of each fuel injector 94. Notably, coked fuel within a fuel injector may disrupt (e.g., reduce, block, etc.) fuel flow through that fuel injector during subsequent turbine engine operation. Such fuel injection disruption may, in turn, disrupt subsequent turbine engine startup and/or subsequent turbine engine operation.

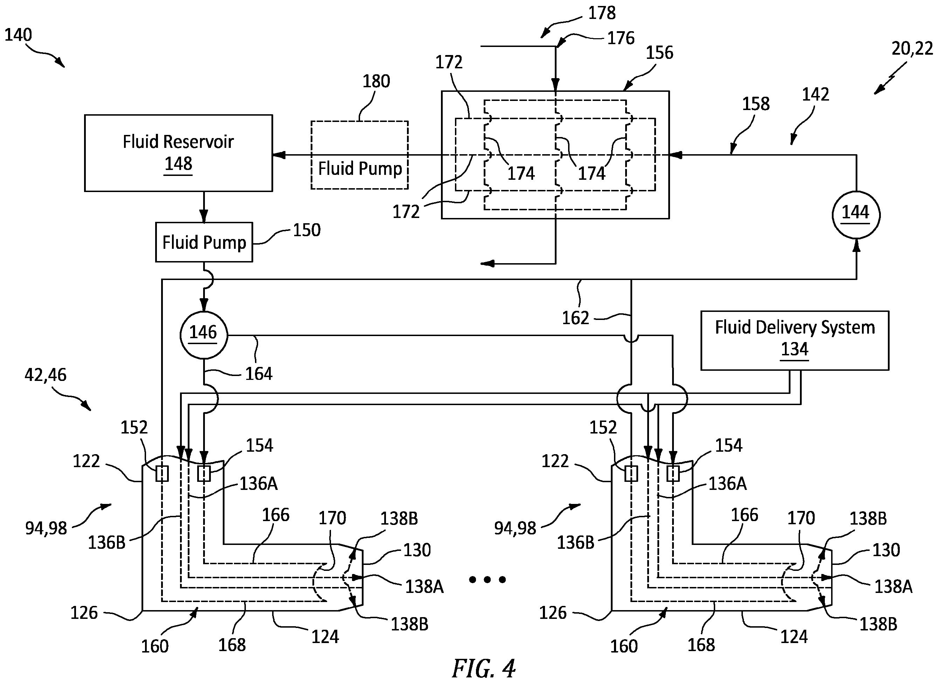

Referring to FIG. 4, to mitigate effects of thermal soak-back while the turbine engine 24 (see FIG. 1) is non-operational subsequent to turbine engine shutdown, the fuel injectors 94 (two of which are shown in FIG. 4 for clarity of illustration) are configured with an injector cooling system 140. This injector cooling system 140 is configured to circulate a cooling fluid through the fuel injectors 94 to cool those fuel injectors 94 at least while the turbine engine 24 (see FIG. 1) is non-operational subsequent to turbine engine shutdown. The injector cooling system 140 of FIG. 4 includes a cooling circuit 142, one or more control valves 144 and 146, a fluid reservoir 148 and a fluid pump 150. The injector cooling system 140 may also include a set of one or more check valves 152 and 154 for each fuel injector 94, and/or a heat exchanger 156.

The cooling circuit 142 may be configured as a closed-loop fluid circuit. This cooling circuit 142 of FIG. 4, for example, includes a base leg 158 and one or more injector legs 160. The base leg 158 extends longitudinally from an inlet 162 into the base leg 158 to an outlet 164 from the base leg 158 (schematically shown in FIG. 4). More particularly, the base leg 158 of FIG. 4 sequentially extends longitudinally through the return control valve 144, the heat exchanger 156, the fluid reservoir 148, the fluid pump 150 and the supply control valve 146 from the base leg inlet 162 to the base leg outlet 164. The injector legs 160 of FIG. 4 are fluidly coupled to the base leg inlet 162 and the base leg outlet 164 in parallel. The base leg inlet 162 and the base leg outlet 164, for example, may each be configured as a manifold collectively coupled to the injector legs 160. However, it is contemplated some or all of the injector legs 160 may alternatively be fluidly coupled in series between the base leg inlet 162 and the base leg outlet 164. Referring again to FIG. 4, each injector leg 160 extends longitudinally through a respective one of the supply check valves 154, a respective one of the fuel injectors 94 and a respective one of the return check valves 152 between the base leg outlet 164 and the base leg inlet 162. Each fuel injector 94 of FIG. 4 includes an inlet fluid passage 166 and an outlet fluid passage 168, where at least (or only) the inlet fluid passage 166 and the outlet fluid passage 168 may collectively form the injector leg 160 within the respective fuel injector 94. The inlet fluid passage 166 may extend longitudinally through the injector stem 122 and longitudinally within the injector nozzle 124, longitudinally along one or more of the fuel passages 136, to an intersection 170 with the outlet fluid passage 168. Similarly, the outlet fluid passage 168 may extend longitudinally through the injector stem 122 and longitudinally within the injector nozzle 124, longitudinally along one or more of the fuel passages 136, to the intersection 170 with the inlet fluid passage 166. With this arrangement, the cooling fluid in each injector leg 160 and its members 166 and 168 is in thermal communication with the fuel in each fuel passage 136 of the respective fuel injector 94 in the injector stem 122 and the injector nozzle 124.

The return control valve 144 is configured to regulate the flow of the cooling fluid received from the injector legs 160 and directed through the cooling circuit 142 and its base leg 158 to the downstream system components 148 and 156. With the return control valve 144 open, the return control valve 144 may fluidly couple (a) a section of the base leg 158 which is upstream of the return control valve 144 to (b) a section of the base leg 158 which is downstream of the return control valve 144. With the return control valve 144 closed, the return control valve 144 may fluidly decouple (a) the upstream section of the base leg 158 from (b) the downstream section of the base leg 158 (or facilitate a minimum flow of the cooling fluid from the upstream section to the downstream section). Of course, it is also contemplated the return control valve 144 may partially open (or partially close) to increase, decrease and/or otherwise meter the flow of the cooling fluid from (a) the upstream section of the base leg 158 to (b) the downstream section of the base leg 158.

The supply control valve 146 is configured to regulate the flow of the cooling fluid received from the fluid pump 150 and directed through the cooling circuit 142 and its base leg 158 to the downstream injector legs 160. With the supply control valve 146 open, the supply control valve 146 may fluidly couple (a) a section of the base leg 158 which is upstream of the supply control valve 146 to (b) a section of the base leg 158 which downstream of the supply control valve 146. With the supply control valve 146 closed, the supply control valve 146 may fluidly decouple (a) the upstream section of the base leg 158 from (b) the downstream section of the base leg 158 (or facilitate a minimum flow of the cooling fluid from the upstream section to the downstream section). Of course, it is also contemplated the supply control valve 146 may partially open (or partially close) to increase, decrease and/or otherwise meter the flow of the cooling fluid from (a) the upstream section of the base leg 158 to (b) the downstream section of the base leg 158.

The fluid reservoir 148 is configured to contain (e.g., store) a quantity of the cooling fluid before, during and/or after injector cooling system operation. The fluid reservoir 148, for example, may be configured as or otherwise include a tank, a cylinder, a pressure vessel, a bladder or any other type of fluid (e.g., liquid and/or gas) storage container. The cooling fluid contained in the fluid reservoir 148 and circulated within the cooling circuit 142 may be liquid lubricant (e.g., oil) or liquid coolant. The present disclosure, however, is not limited to such exemplary cooling fluids. For example, it is contemplated the cooling fluid may alternatively be a quantity of the fuel. In such embodiments, the injector cooling system 140 may be integrated with the fuel delivery system 134 and the fluid reservoir 148 may be a fuel reservoir for the fuel delivery system 134.

The fluid pump 150 is configured to direct (e.g., circulate) a flow of the cooling fluid from the base leg 158, through each of the injector legs 160, and back into the base leg 158. The fluid pump 150 of FIG. 4, for example, is configured to pump a flow of the cooling fluid received from the fluid reservoir 148 through each of the fuel injectors 94 and then the heat exchanger 156 and back into the fluid reservoir 148. This fluid pump 150 may be configured as an electric pump such that the fluid pump 150 may be operated independent of the turbine engine 24 as described below in further detail.

Each supply check valve 154 may be fluidly coupled inline along the cooling circuit 142 and a respective one of the injector legs 160 at an inlet to the respective inlet fluid passage 166. Each supply check valve 154 is configured as a one-way valve which permits the flow of the cooling fluid into the respective fuel injector 94 and its inlet fluid passage 166, without permitting a backflow of the cooling fluid into the base leg 158 from the fuel injectors 94 and their inlet fluid passages 166.

Each return check valve 152 may be fluidly coupled inline along the cooling circuit 142 and a respective one of the injector legs 160 at an outlet from the respective outlet fluid passage 168. Each return check valve 152 is configured as a one-way valve which permits the flow of the cooling fluid out of the respective fuel injector 94 and its inlet fluid passage 166 into the base leg 158, without permitting a backflow of the cooling fluid from the base leg 158 back into the respective fuel injector 94 and its inlet fluid passage 166.

The heat exchanger 156 of FIG. 4 includes one or more internal cooling fluid passages 172 and one or more internal working fluid passages 174. Each of these fluid passages 172 and 174 is formed by the heat exchanger 156. The cooling fluid passages 172 collectively form a longitudinal section of the cooling circuit 142 and its base leg 158. The working fluid passages 174 collectively form a longitudinal section of a working fluid circuit 176 for another working fluid system 178. Briefly, this working fluid system 178 may be configured as part of a thermal management system (TMS) for the turbine engine 24, a lubrication system for the turbine engine 24, the fuel delivery system 134 for the turbine engine 24, a bleed air system for the turbine engine 24, or otherwise. The cooling fluid passages 172 are fluidly discrete from the working fluid passages 174 within the heat exchanger 156. The cooling fluid passages 172 and the working fluid passages 174 may be arranged to configure the heat exchanger 156 as a crossflow heat exchanger, a counterflow heat exchanger, a parallel flow heat exchanger, or a hybrid heat exchanger with a combination crossflow, counterflow and/or parallel flow arrangement. For ease of description, the heat exchanger 156 may generally be described below as a liquid-to-liquid heat exchanger. However, it is contemplated the heat exchanger 156 may alternatively be configured as a liquid-to-gas heat exchanger depending on the type of working fluid flowing (e.g., circulated) in the working fluid circuit 176.

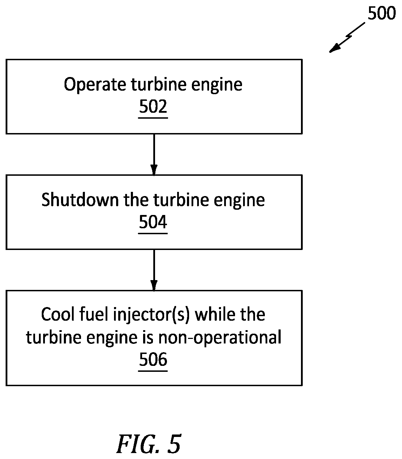

FIG. 5 is a flow diagram of a method 500 for operating an aircraft powerplant. For ease of description, the operating method 500 of FIG. 5 is described below with respect to the aircraft propulsion system 22 described herein and illustrated in FIGS. 1-4. The present disclosure, however, is not limited to such an exemplary aircraft powerplant arrangement.

In step 502, the turbine engine 24 is operated utilizing the fuel delivery system 134 and the fuel injectors 94. During this turbine engine operation, the fuel delivery system 134 delivers the fuel to the fuel injectors 94. The fuel injectors 94 inject the fuel into the combustor 92 and its combustion chamber 90. The injected fuel mixes with the compressed core air received from the diffuser plenum 96, and the fuel-air mixture is ignited to produce combustion products that drive the rotation of the turbine rotors 63 and 64 as described above. This turbine engine operation may occur while the aircraft is on ground (e.g., warming up, taxiing), taking off, flying (e.g., climbing, cruising, descending, etc.) and/or landing.

In step 504, the turbine engine 24 is shutdown. Typically, this turbine engine shutdown is performed while the aircraft is on the ground and stationary; e.g., parked at a gate, at a parking slot or in a repair facility. During the turbine engine shutdown, the fuel delivery system 134 terminates (e.g., cuts off) the flow of the fuel to the fuel injectors 94 and thereby terminates the injection of the fuel into the combustor 92 and its combustion chamber 90. Upon this termination of the fuel injection, combustion within the combustor 92 and its combustion chamber 90 subsequently terminates and the combustor 92 flames out. Following the combustor flame out, the combustion products are no longer produced and the rotation of the engine rotating structures 68 and 72 will begin to slow and eventually stop. When the fuel is terminated to the fuel injectors 94, the combustor 92 is flamed out and the combustion products are no longer being generated, the turbine engine 24 may be termed non-operational; e.g., shutdown. In general, while the turbine engine 24 is non-operational, each of the engine rotating structures 68, 72 is stationary, spooling down or otherwise rotating well below idle speed. However, it is contemplated one or more of the engine rotating structures 68 and 72 may be rotated using an electric motor for a predetermined period following turbine engine shutdown, for example, to facilitate ventilation and/or cool components of the engine core 46. For example, the engine rotating structures 68 and 72 may be rotated at or above a threshold speed (e.g., minimum operating speed) when the turbine engine 24 is operational and below the threshold speed when the turbine engine 24 is non-operational, such as to uniformly cool the engine rotating structures 68 and 72.

In step 506, the injector cooling system 140 is operated while the turbine engine 24 is non-operational and subsequent to turbine engine shutdown. For example, following turbine engine shutdown, the injector cooling system 140 may energize the fluid pump 150 (e.g., the electric pump) and circulate the cooling fluid through the fuel injectors 94 and their fluid passages 166 and 168. As the cooling fluid is flowing within the fluid passages 166 and 168 of a respective fuel injector 94, heat energy may transfer out of a body of the respective fuel injector 94 and into the cooling fluid. This heat transfer cools the respective fuel injector 94 while heating the working fluid. By cooling each fuel injector 94, the fuel within that fuel injector 94 may be maintained at a temperature below its coking temperature. The heated cooling fluid may then be cooled by the heat exchanger 156 and returned to the fluid reservoir 148 for subsequent recirculation. Alternatively, it is contemplated the heat exchanger 156 may be omitted and the heated cooling fluid may be directed directly back into the fluid reservoir 148. Here, a thermal mass of the cooling fluid within the fluid reservoir 148 may be utilized to lower the temperature of the returning cooling fluid before being recirculated.

The injector cooling step 506 may be performed for a certain period of time; e.g., a predetermined period of time. This period of time may be a universal period of time. Alternatively, the period of time may be selected based on environmental conditions at a location where the aircraft is parked. For example, when ambient temperature is relatively high outside of the aircraft (e.g., in a hot environment), the period of time may be selected to be longer than when the ambient temperature is relatively low outside of the aircraft (e.g., in a cool environment). Of course, it is contemplated the injector cooling system 140 may also or alternatively be operated in response to various other operational parameters.

In some embodiments, the operation of the injector cooling system 140 and the circulation of the cooling fluid through the fuel injectors 94 may be initiated (e.g., started) following the shutdown of the turbine engine 24. In other embodiments, the operation of the injector cooling system 140 and the circulation of the cooling fluid through the fuel injectors 94 may be initiated during the shutdown of the turbine engine 24. In still other embodiments, it is contemplated the injector cooling system 140 may be operated during one or more mode of the turbine engine operation; e.g., during high power operation. However, the operation of the injector cooling system 140 is ideally initiated during the turbine engine shutdown or post-turbine engine shutdown to reduce aircraft propulsion system power requirements. Moreover, during typical turbine engine operation, the fuel may be directed fast enough through the fuel injectors 94 to obviate a need to additional fuel injector cooling.

In some embodiments, referring to FIG. 4, the injector cooling system 140 may also include a second fluid pump 180 (e.g., an electric scavenge pump) fluidly coupled inline along the base leg 158 downstream of the fuel injectors 94 and the injector legs 160. The second fluid pump 180, for example, may be fluidly coupled inline along the base leg 158 between the heat exchanger 156 and the fluid reservoir 148. This second fluid pump 180 may be configured to evacuate each of the fuel injectors 94 and the injector legs 160 of the cooling fluid after the injector cooling step 506 and/or prior to subsequent turbine engine operation. For example, the supply control valve 146 may be closed and/or the fluid pump 150 may be turned off (e.g., deenergized) to prevent additional cooling fluid from flowing into the fuel injectors 94 and the injector legs 160. In addition, the second fluid pump 180 may be turned on (e.g., energized) to draw any remaining cooling fluid out of the fuel injectors 94 and the injector legs 160 such that the injector legs 160 may be filled with air for subsequent operation of the turbine engine 24. Of course, in other embodiments, it is contemplated the cooling fluid may remain within (or may be circulated through) the fuel injectors 94 and the injector legs 160 during subsequent operation of the turbine engine 24 where the cooling fluid is a high temperature working fluid, for example.

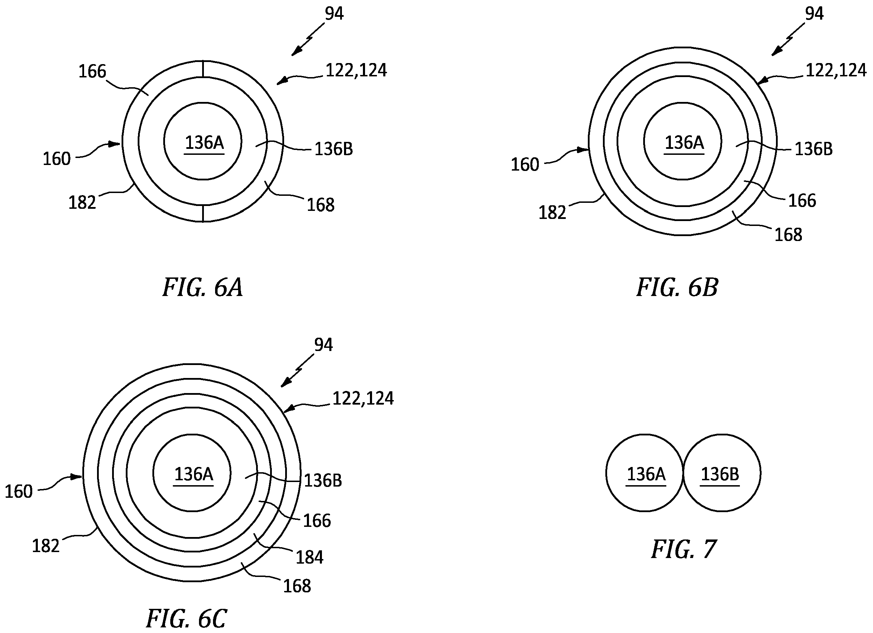

In some embodiments, referring to FIGS. 6A-C, each fluid passage 166, 168 may extend longitudinally along one or more of the fuel passages 136 within the respective fuel injector 94 and its members 122 and/or 124. Each fluid passage 166, 168 may also be disposed laterally between the one or more of the fuel passages 136 and an exterior 182 of the respective fuel injector 94 and its members 122 and/or 124. Each fluid passage 166, 168 of FIG. 6A, for example, has an arcuate cross-sectional geometry. The fluid passages 166 and 168 of FIG. 6A are arranged circumferentially side-by-side and collectively extend circumferentially about (e.g., circumscribe) the one or more fuel passages 136 within the respective fuel injector 94. In another example, referring to FIGS. 6B and 6C, each fluid passage 166, 168 may have an annular cross-sectional geometry. Each of these fluid passages 166, 168 of FIGS. 6B and 6C may extend circumferentially about (e.g., circumscribe) the one or more fuel passages 136 within the respective fuel injector 94. Here too, the outlet fluid passage 168 may also extend longitudinally along and extend circumferentially about (e.g., circumscribes) the inlet fluid passage 166. Thus, the inlet fluid passage 166 of FIGS. 6B and 6C is disposed laterally between the one or more fuel passage 136 and the outlet fluid passage 168. The outlet fluid passage 168 of FIGS. 6B and 6C is disposed laterally between the inlet fluid passage 166 and the exterior 182 of the respective fuel injector 94 and its members 122, 124. However, in other embodiments, it is contemplated the positions of the fluid passages 166 and 168 may be reversed. In still another example, referring to FIG. 6C, an air plenum 184 (e.g., an annular air passage or cavity) may be disposed between the one or more fuel passages 136 and the exterior 182 of the respective fuel injector 94 and its members 122 and/or 124. Here, the air plenum 184 extends longitudinally along and extends circumferentially about (e.g., circumscribes) the one or more fuel passages 136 within the respective fuel injector 94. The air plenum 184 may also be disposed laterally between the fluid passages 166 and 168 within the respective fuel injector 94. However, in other embodiments, it is contemplated the positions of the air plenum 184 and the inlet fluid passage 166, or the positions of the air plenum 184 and the outlet fluid passage 168 may be reversed.

Referring to FIGS. 6A-C, one of the fuel passages 136 may extend longitudinally along and extend circumferentially about (e.g., circumscribe) the other one of the fuel passages 136. Here, the second fuel passage 136B is laterally outboard of and circumscribes the first fuel passage 136A. The present disclosure, however, is not limited to such an exemplary fuel passage arrangement. For example, it is contemplated the positions of the fuel passages 136A and 136B may be reversed. In another example, referring to FIG. 7, the fuel passages 136A and 136B may be arranged laterally side-by-side. Note, it is contemplated this fuel passage arrangement of FIG. 7 may be paired with any of the fluid passage arrangements of FIGS. 6A-C.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A method for operating an aircraft powerplant (20), comprising:
operating a turbine engine (24) of the aircraft powerplant (20), the operating of the turbine engine (24) comprising delivering fuel to a fuel injector (94) of the turbine engine (24), injecting the fuel into a combustor (92) of the turbine engine (24) using the fuel injector (94), and combusting the fuel within the combustor (92);
shutting down operation of the turbine engine (24); and
circulating fluid through the fuel injector (94) to cool the fuel injector (94) when the turbine engine (24) is non-operational subsequent to the shutting down of the operation of the turbine engine (24).

2. The method of claim 1, wherein combustion within the combustor (92) is terminated during the shutting down of the operation of the turbine engine (24).

3. The method of claim 1 or 2, wherein:
the turbine engine (24) includes a compressor section (41), a combustor section (42), a turbine section (43) and a rotating structure (68);
the combustor section (42) includes the combustor (92) and the fuel injector (94);
the rotating structure (68) includes a compressor rotor (62) in the compressor section (41) and a turbine rotor (63) in the turbine section (43); and
the rotating structure (68) rotates about an axis (34) at or above a threshold speed during the operating of the turbine engine (24), and the rotating structure (68) is at least one of stationary or rotating about the axis (34) below the threshold speed when the turbine engine (24) is non-operational.

4. The method of any preceding claim, wherein the fluid is circulated through the fuel injector (94) for a predetermined period of time subsequent to the shutting down of the operation of the turbine engine (24).

5. The method of any preceding claim, wherein:
the fluid is circulated through a fluid passage (166) in the fuel injector (94) during the circulating of the fluid; and
the fluid is not circulated through the fluid passage (166) in the fuel injector (94) during the operating of the turbine engine (24) and/or during the shutting down of the operation of the turbine engine (24).

6. The method of any of claims 1 to 4, further comprising:
circulating the fluid through the fuel injector (94) during the shutting down of the operation of the turbine engine (24); and/or
circulating of the fluid through the fuel injector (94) during the operating of the turbine engine (24).

7. The method of any preceding claim, wherein the fluid is evacuated from the fuel injector (94) prior to a subsequent operation of the turbine engine (24).

8. The method of any preceding claim, wherein the fluid is circulated using an electric pump (150).

9. The method of any preceding claim, wherein
the fuel flows through a fuel passage (136) in the fuel injector (94) during the operating of the turbine engine (24); and
the fluid flows through a or the fluid passage (166) in the fuel injector (94) during the circulating of the fluid, and the fluid passage (166) is disposed between the fuel passage (136) and an exterior (182) of the fuel injector (94) within the fuel injector (94).

10. The method of any preceding claim, wherein
the fuel flows through a or the fuel passage (136) in the fuel injector (94) during the operating of the turbine engine (24); and
the fluid flows through a or the fluid passage (166) in the fuel injector (94) during the circulating of the fluid, and the fluid passage (166) extends longitudinally along and circumscribes the fuel passage (36) within the fuel injector (94),
optionally wherein an air plenum (184) is disposed between the fuel passage (136) and the fluid passage (166) within the fuel injector (94).

11. The method of claim 10, wherein the fluid passage (166) is a first fluid (166) passage and the fluid further flows through a second fluid passage (168) in the fuel injector (94) during the circulating of the fluid, and the second fluid passage (168) extends longitudinally along and circumscribes the first fluid passage (166) within the fuel injector (94) .

12. An aircraft powerplant (20), comprising:
a turbine engine (24) including a compressor section (41), a combustor section (42), a turbine section (43) and a flowpath (48), the flowpath (48) extending through the compressor section (41), the combustor section (42) and the turbine section (43), the combustor section (42) including a combustor (92) and a fuel injector (94), the combustor (94) comprising a combustion chamber (90) along the flowpath (48), and the fuel injector (94) configured to inject fuel into the combustion chamber (90) for combustion during operation of the turbine engine (24); and
a cooling system (140) configured to flow fluid in the fuel injector (94) when the turbine engine (24) is non-operational subsequent to shutdown of the turbine engine (24), the cooling system (140) comprising an electric pump (150) which is operable independent of operation of the turbine engine (24).

13. The aircraft powerplant of claim 12, wherein the fuel injector (94) comprises:
a fuel passage (136) configured to flow the fuel for injecting into the combustion chamber (90); and
a fluid passage (166) configured to flow the fluid for circulating through the fuel injector (94), the fluid passage (166) disposed between the fuel passage (136) and an exterior (182) of the fuel injector (94) and/or extending longitudinally along and circumscribing the fuel passage (136).

14. The aircraft powerplant of claim 12 or 13, wherein the cooling system (140) is further configured to evacuate the fluid from the fuel injector (94) prior to subsequent operation of the turbine engine (24).

15. The aircraft powerplant of any of claims 12 to 14, wherein the cooling system (140) includes a heat exchanger (156) configured to cool the fluid.
